# EUROPÄISCHE PATENTSCHRIFT

(11) **EP 1 005 401 B1**
(45) Veröffentlichungstag und Bekanntmachung des Hinweises auf die Patenterteilung: **02.01.2003**
(21) Anmeldenummer: 99929251.9
(22) Anmeldetag: 17.06.1999
(51) Int. Cl.: B23P 11/02, F16B 4/00, F16D 1/08

(54) **VERFAHREN ZUR HERSTELLUNG EINER LÖSBAREN VERBINDUNG ZWISCHEN ZWEI BAUTEILEN UND VERBINDUNGSSYSTEM ZUR DURCHFÜHRUNG DES VERFAHRENS**
METHOD FOR REMOVABLY CONNECTING TWO MEMBERS AND CONNECTION SYSTEMS FOR REALISING THE SAME
PROCEDE POUR ASSEMBLER DEUX ELEMENTS DE MANIERE DETACHABLE ET SYSTEMES D'ASSEMBLAGE POUR METTRE LEDIT PROCEDE EN OEUVRE

(30) Priorität: 18.06.1998 DE 19827109; 01.08.1998 DE 19834739
(43) Veröffentlichungstag der Anmeldung: 07.06.2000
(60) Teilanmeldung: 00111741.5
(73) Patentinhaber: Schunk GmbH & Co. KG Fabrik für Spann- und Greifwerkzeuge, 74348 Lauffen (DE)
(72) Erfinder: RETZBACH, Thomas, D-74357 Bönnigheim (DE)
(74) Vertreter: Paul, Dieter-Alfred, Dipl.-Ing.
(86) Internationale Anmeldenummer: EP9904190
(87) Internationale Veröffentlichungsnummer: WO99065643

(56) Entgegenhaltungen:
- CH-A- 461 183
- DE-A- 4 008 906
- DE-A- 19 624 048
- DE-C- 19 521 755
- US-A- 4 477 010

## Beschreibung

Die vorliegende Erfindung betrifft ein Verfahren und ein Verbindungssystem zur Herstellung einer lösbaren Verbindung zwischen zwei Bauteilen, bei dem eines der Bauteile durch radiale Druckkräfte derart elastisch verformt wird, daß eine wirksame Umfangskontur der entsprechenden wirksamen Umfangskontur des anderen Bauteils mit vorgegebenem Spiel entspricht, so daß die beiden Bauteile ineinandersteckbar sind, und bei dem nach dem Zusammenstecken der beiden Bauteile eine Druckverbindung hergestellt wird, indem das verformte Bauteil durch Verringerung bzw. Aufhebung der radialen Druckkräfte elastisch rückverformt wird, wobei die wirksame Umfangskontur des verformbaren Bauteils im unverformten Zustand innerhalb und außerhalb der wirksamen Umfangskontur des anderen Bauteils liegende Umfangsabschnitte aufweist.

Verfahren zur Herstellung einer reibschlüssigen Verbindung zwischen zwei Bauteilen dieser Art sind aus der DE 195 21 755 C1 sowie der DE 196 24 048 A1 bekannt. Bei diesen Verfahren wird in übereinstimmender Weise ein polygones oder ovales Bauteil durch Aufbringung von radialen Druckkräften elastisch in eine runde Form gebracht, so daß ein runder Schaft unter Beibehaltung der radialen Druckkräfte montiert werden kann. Wenn dann die Radialkräfte verringert oder aufgehoben werden, federt das verformte Bauteil in seine ovale oder polygone Ausgangsform zurück, so daß der Schaft darin über einen Preßsitz fixiert wird. Aus der DE 40 08 906 A1 ist ein ähnliches Verbindungssystem bekannt, dessen verformbares Bauteil anstelle einer Polygonform Mitnehmerelemente aufweist.

Diese Art der Verbindung zweier Bauteile hat sich in der Praxis durchaus bewährt. Es wird allerdings häufig als nachteilig angesehen, daß extrem hohe Druckkräfte erforderlich sind, wenn das zu verformende Bauteil große Wandstärken besitzt, und dann auch die auftretenden Verformungen sich nicht exakt beherrschen lassen, d.h. zum Teil undefiniert sind.

Aufgabe der Erfindung ist es daher, ein Verfahren sowie ein Verbindungssystem der eingangs genannten Art anzugeben, mit denen diese Nachteile überwunden werden können, d.h. die eine problemlose Verwendung von zu verformenden Bauteilen mit großer Wandstärke ermöglichen.

Diese Aufgabe ist erfindungsgemäß durch ein Verfahren und ein System gemäß den Ansprüchen 1 bzw. 6 gelöst. Es hat sich gezeigt, daß die Hohlkörper das Verformungsverhalten von dünnwandigen Bauteilen aufweisen und mit vergleichbarem Kraftaufwand verformt werden können, wenn ihr Querschnitt in erfindungsgemäßer Weise durch Hohlräume geschwächt wird und die radialen Verformungskräfte im Bereich der Hohlräume angreifen.

Wenn beispielsweise ein Schaft von außen gespannt werden soll, wird ein Hohlkörper verwendet, dessen Hohlräume im Bereich derjenigen Umfangsabschnitte vorgesehen sind, die im ungespannten Zustand außerhalb der Umfangskontur des zu spannenden Schafts liegen, und werden die radialen Druckkräfte von außen auf den Hohlkörper ausgeübt. Dies hat zur Folge, daß die zwischen den Kraftangriffspunkten liegenden Bereiche des Hohlkörpers, d.h. diejenigen Umfangsabschnitte, die im ungespannten Zustand innerhalb der Umfangskontur des Schafts liegen, nach außen gedrückt werden, so daß der Schaft in den Hohlkörper eingeschoben werden kann.

Wenn mit dem Hohlkörper eine Hohlwelle außenseitig gespannt werden soll, wird ein Hohlkörper verwendet, dessen Hohlräume im Bereich derjenigen Umfangsabschnitte vorgesehen sind, die im ungespannten Zustand innerhalb der Umfangskontur des anderen Bauteils liegen, und werden die radialen Druckkräfte von der Innenseite her auf den Hohlkörper aufgebracht. Dies hat zur Folge, daß die zwischen den Kraftangriffspunkten gelegenen Umfangsabschnitte, die, so daß der Hohlkörper in die Hohlwelle eingeschoben werden kann.

Die Hohlräume sollten sich über einen wesentlichen Umfangsbereich des Hohlkörpers erstrecken. Als zweckmäßig hat es sich erwiesen, wenn sie sich insgesamt über wenigsten 200°, insbesondere über etwa 280° bis 300° erstrekken, so daß sie voneinander nur durch schmale Stegbereiche getrennt sind. Gemäß einer bevorzugten Ausführungsform sind in dem Hohlkörper insgesamt drei Aussparungen vorgesehen, die sich jeweils über einen Umfangsbereich von 80 bis 100° erstrecken, wobei sie in bevorzugter Weise gleichmäßig verteilt über den Umfang angeordnet sind.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine erste Ausführungsform eines erfindungsgemäßen Verbindungssystems zum Spannen eines Schaftes im Spannzustand, und
- Figur 2: das Verbindungssystem aus Figur 1 im Füge- und/oder Lösezustand.

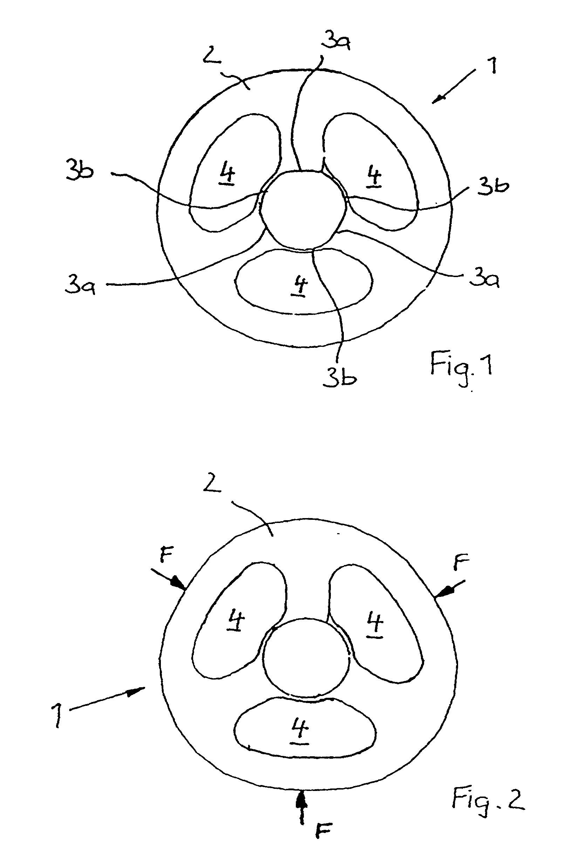

In den Figuren 1 und 2 ist eine Ausführungsform eines erfindungsgemäß ausgebildeten Verbindungssystems 1 dargestellt. Zu diesem Verbindungssystem 1 gehören ein nicht dargestellter runder Schaft und ein auf dem Schaft zu befestigender Hohlkörper in der Form eines Ringelements 2. Das Ringelement 2 hat eine polygonförmige Innenkontur und eine etwa kreisförmige Außenkontur, wobei die Innenkontur einerseits Umfangsabschnitte 3a aufweist, die innerhalb des Außenumfangs des Schaftes liegen, und andererseits Umfangsabschnitte 3b besitzt, die außerhalb des Außenumfangs des Schafts liegen. Die Polygonform ist für eine Dreipunktspannung vorgesehen, für eine Zweipunktspannung kann die Innenkontur aus oval ausgebildet sein. Das Ringelement 2 weist drei etwa nierenförmige Hohlräume 4 auf, die sich jeweils über einen Umfangsbereich von etwa 100° erstrecken und in den Hohlkörper 2 beispielsweise durch einen Erodier- oder Fräsvorgang eingebracht sind.

Zum Herstellen einer Verbindung zwischen dem Schaft und dem Ringelement 2 werden von außen auf das Ringelement 2 radiale Druckkräfte F ausgeübt, wobei die Kraftangriffspunkte so gewählt sind, daß die Wirkungslinien der Kräfte F etwa mittig durch die Hohlräume 4 verlaufen. Durch die Druckkräfte F wird das Ringelement 2 im Bereich der Kraftangriffspunkte radial nach innen gedrückt, und gleichzeitig werden die mittig zwischen den Kraftangriffspunkten gelegenen Bereiche, d.h. diejenigen Umfangsabschnitte 3a, die im ungespannten Zustand innerhalb der Außenkontur des Schafts liegen und damit ein Einschieben des Schafts in das Ringelement 2 verhindern, radial nach außen elastisch verformt, so daß die Innenkontur eine runde Form annimmt, wie dies in Figur 2 dargestellt ist. Durch die radiale Bewegung der Umfangsabschnitte 3a wird der Platz geschaffen, der notwenig ist, damit der Schaft in das Ringelement 2 eingeschoben oder wieder aus dem Hohlkörper 2 herausgezogen werden kann.

Wenn jetzt die radialen Druckkräfte verringert oder aufgehoben werden, erfolgt eine elastische Rückverformung des Ringelements 2 mit der Folge, daß sich die Umfangsabschnitte 3a wieder nach innen bewegen und mit der elastischen Rückstellkraft gegen die Innenwandung des Schaftsdrücken, wodurch ein Preßsitz gebildet wird.

Zum außenseitigen Spannen beispielsweise einer Hohlwelle wird ein Ringelement mit einer polygonförmigen Außenkontur verwendet, die sowohl innerhalb als auch außerhalb der Innenfläche der Hohlwelle gelegene Umfangsabschnitte aufweist. Die Hohlräume liegen in diesem Fall im Bereich der inneren Umfangsabschnitte. Zum Spannen der Hohlwelle werden radiale Druckkräfte von innen auf das Ringelement ausgeübt, die so angreifen, daß ihre Wirkungslinien etwa mittig durch die Hohlräume verlaufen. Durch die radialen Druckkräfte wird das Ringelement in den zwischen den Kraftangriffspunkten gelegenen Bereich, d.h. im Bereich derjenigen Umfangsabschnitte, die im unverformten Zustand außerhalb der Innenkontur der Hohlwelle liegen und damit ein Einschieben des Ringelements in die Hohlwelle verhindern, nach innen verformt, so daß das Ringelement in die Hohlwelle eingeschoben werden kann.

## Patentansprüche

1. Verfahren zur Herstellung einer lösbaren Verbindung zwischen zwei Bauteilen, bei dem eines der Bauteile (2) durch radiale Druckkräfte derart elastisch verformt wird, daß eine wirksame Umfangskontur der entsprechenden wirksamen Umfangskontur des anderen Bauteils mit vorgegebenem Spiel entspricht, so daß die beiden Bauteile (2) ineinandersteckbar sind, und bei dem nach dem Zusammenstecken der beiden Bauteile (2) eine Druckverbindung hergestellt wird, indem das verformte Bauteil (2) durch Verringerung bzw. Aufhebung der radialen Druckkräfte elastisch rückverformt wird, wobei die wirksame Umfangskontur des verformbaren Bauteils im unverformten Zustand innerhalb und außerhalb der wirksamen Umfangskontur des anderen Bauteils liegende Umfangsabschnitte (3a, 3b) aufweist, **dadurch gekennzeichnet, daß** als elastisch verformbares Bauteil ein Hohlkörper (2) verwendet wird, der in seiner Wandung mehrere zur wirksamen Umfangskontur hin geschlossene Hohlräume (4) aufweist, und daß die radialen Druckkräfte auf die der wirksamen Umfangskontur gegenüberliegende Innen- bzw. Außenkontur des Hohlkörpers (2) so ausgeübt werden, daß ihre Wirkungslinien in Umfangsrichtung betrachtet insbesondere etwa mittig durch die Hohlräume (4) verlaufen.

2. Verfahren nach Anspruch 1, **dadurch gekennzeichnet, daß** die radialen Druckkräfte gleichmäßig verteilt über den Umfang auf den Hohlkörper (2) ausgeübt werden.

3. Verfahren nach einem der vorherigen Ansprüche, **dadurch gekennzeichnet, daß** ein Hohlkörper (2) verwendet wird, dessen wirksame Umfangskontur eine polygone oder ovale Grundform hat.

4. Verfahren nach einem der vorherigen Ansprüche zum wiederholbaren Befestigen eines verformbaren Hohlkörpers (2) auf einem Schaft, **dadurch gekennzeichnet, daß** ein Hohlkörper (2) verwendet wird, dessen Hohlräume (4) im Bereich derjenigen Umfangsabschnitte (3b) vorgesehen sind, die im ungespannten Zustand außerhalb der Umfangskontur des zu spannenden Schafts liegen.

5. Verfahren nach einem der Ansprüche 1 bis 3 zum wiederholbaren Befestigen eines elastisch verformbaren Hohlkörpers (2) in einer Ausnehmung eines Bauteils, **dadurch gekennzeichnet, daß** ein Hohlkörper (2) verwendet wird, dessen Hohlräume (4) im Bereich derjenigen Umfangsabschnitte vorgesehen sind, die im ungespannten Zustand innerhalb der Umfangskontur des anderen Bauteils (1) liegen.

6. Verbindungssystem mit zwei zu verbindenden Bauteilen (2), bei dem eines der Bauteile (2) durch radiale Druckkräfte derart elastisch verformbar ist, daß eine wirksame Umfangskontur der entsprechenden wirksamen Umfangskontur des anderen Bauteils mit vorgegebenem Spiel entspricht, so daß die beiden Bauteile (2) ineinandersteckbar sind, und bei dem nach dem Zusammenstecken der beiden Bauteile (2) eine Druckverbindung herstellbar ist, indem das verformbare Bauteil (2) durch Verringerung bzw. Aufhebung der radialen Druckkräfte elastisch rückverformt wird, wobei die wirksame Umfangskontur des verformbaren Bauteils (2) im unverformten Zustand innerhalb und außerhalb der wirksamen Umfangskontur des anderen Bauteils liegende Umfangsabschnitte (3a, 3b) aufweist, **dadurch gekennzeichnet, daß** das elastisch verformbare Bauteil ein Hohlkörper (2) ist, der in seiner Wandung mehrere Hohlräume (4) aufweist, die zur wirksamen Umfangskontur hin geschlossen sind.

7. Verbindungssystem nach Anspruch 6 zum Befestigen eines verformbaren Hohlkörpers (2) auf einem Schaft, **dadurch gekennzeichnet, daß** die Hohlräume (4) im Bereich derjenigen Umfangsabschnitte (3b) vorgesehen sind, die im ungespannten Zustand außerhalb der Umfangskontur des zu spannenden Schafts liegen.

8. Verbindungssystem nach Anspruch 6, zum wiederholbaren Befestigen eines elastisch verformbaren Hohlkörpers (2) in einer Ausnehmung eines Bauteils, **dadurch gekennzeichnet, daß** die Hohlräume (4) im Bereich derjenigen Umfangsabschnitte des Hohlkörpers (2) vorgesehen sind, die im ungespannten Zustand innerhalb der Umfangskontur des anderen Bauteils liegen.

9. Verbindungssystem nach einem der Ansprüche 6 bis 8, **dadurch gekennzeichnet, daß** die Hohlräume (4) nierenförmig ausgebildet sind.

10. Verbindungssystem nach einem der Ansprüche 6 bis 9, **dadurch gekennzeichnet, daß** die wirksame Umfangskontur des Hohlkörpers (2) im ungespannten Zustand eine polygone oder ovale Grundform besitzt.

11. Verbindungssystem nach einem der Ansprüche 6 bis 10, **dadurch gekennzeichnet, daß** die Hohlräume (4) sich insgesamt über wenigstens 200°, vorzugsweise über 200 bis 300°, in Umfangsrichtung erstrecken und voneinander nur durch schmale Stegbereiche getrennt sind.

12. Verbindungssystem nach Anspruch 11, **dadurch gekennzeichnet, daß** der Hohlkörper (2) drei Hohlräume (4) aufweist, die sich jeweils über einen Umfangsbereich von 80° bis 100° erstrecken und insbesondere gleichmäßig verteilt über den Umfang des Hohlkörpers (2) angeordnet sind.

## Claims

1. Method for making a releasable connection between two members in which one of the members (2) is resiliently deformed by radial pressure forces in such a way that an operative peripheral contour corresponds with predetermined clearance to the corresponding operative peripheral contour of the other member so that the two members (2) can be inserted one into the other, and in which after the two members (2) have been fitted together a pressure connection is established because the deformed member (2) is resiliently re-deformed back by reduction or removal of the radial pressure forces, the operative peripheral contour of the deformable member having peripheral sections (3a, 3b) that in the undeformed state are disposed inwardly and outwardly of the operative peripheral contour of the other member, **characterised in that** a hollow body (2) is utilised by way of resiliently deformable member which in its wall has a plurality of cavities (4) that are closed off as against the operative peripheral contour, and **in that** the radial pressure forces are exerted against the inner contour, respectively against the outer contour, disposed opposite to the operative peripheral contour of the hollow body (2) in such a way that their lines of action, considered in the peripheral direction, extend through the cavities (4) especially more or less centrally.

2. Method according to claim 1, **characterised in that** the radial pressure forces are exerted evenly distributed along the periphery of the hollow body (2).

3. Method according to one of the preceding claims, **characterised in that** a hollow body (2) is utilised whose operative peripheral contour is of polygonal or oval outline.

4. Method according to one of the preceding claims, for repeatably securing a deformable hollow body (2) to a shaft, **characterised in that** a hollow body (2) is utilised whose cavities (4) are provided in the region of those peripheral sections (3b) which in the unstressed state are disposed outwardly of the peripheral contour of the shaft that is to be clamped.

5. Method according to one of claims 1 to 3, for repeatably securing a resiliently deformable hollow body (2) in a recess of a member, **characterised in that** a hollow body (2) is utilised whose cavities (4) are provided in the region of those peripheral sections which in the unstressed state are disposed inwardly of the peripheral contour of the other member (1).

6. Connecting system having two members (2) that are to be connected, in which one of the members (2) is resiliently deformable by radial pressure forces in such away that an operative peripheral contour that corresponds with predetermined clearance to the corresponding operative peripheral contour of the other member so that the two members (2) can be inserted one into the other, and in which after the two members (2) have been fitted together a pressure connection can be established because the deformed member (2) is resiliently re-deformed back by reduction or removal of the radial pressure forces, the operative peripheral contour of the deformable member (2) having peripheral sections (3a, 3b) that in the undeformed state are disposed inwardly and outwardly of the operative peripheral contour of the other member, **characterised in that** the resiliently deformable member is a hollow body (2) which in its wall has a plurality of cavities (4) that are closed off as against the operative peripheral contour.

7. Connecting system according to claim 6 for securing a deformable hollow body (2) to a shaft, **characterised in that** the cavities (4) are provided in the region of those peripheral sections (3b) which in the unstressed state are disposed outwardly of the peripheral contour of the shaft that is to be clamped.

8. Connecting system according to claim 6, for repeatably securing a resiliently deformable hollow body (2) in a recess of a member, **characterised in that** the cavities (4) are provided in the region of those peripheral sections of the hollow body (2) which in the unstressed state are disposed inwardly of the peripheral contour of the other member.

9. Connecting system according to one of claims 6 to 8, **characterised in that** the cavities (4) are made kidney shaped.

10. Connecting system according to one of claims 6 to 9, **characterised in that** the operative peripheral contour of the hollow body (2) is of polygonal or oval outline in the unstressed state.

11. Connecting system according to one of claims 6 to 10, **characterised in that** the cavities (4) extend in the peripheral direction by at least 200°, preferably by 200 to 300° in total and are separated from each other by only narrow web sections.

12. Connecting system according to claim 11, **characterised in that** the hollow body (2) has three cavities (4) which each extend along a peripheral region of 80° to 100° and are arranged distributed along the periphery of the hollow body (2), especially evenly.

## Revendications

1. Procédé pour fabriquer un assemblage amovible entre deux composants, avec lequel l'un des composants (2) est déformé de façon élastique par des forces de pression radiales de telle sorte qu'un contour périphérique efficace correspond au contour périphérique efficace correspondant de l'autre composant avec un jeu prédéfini, de sorte que les deux composants (2) peuvent être emboîtés l'un dans l'autre, et avec lequel un assemblage par pression est établi après l'emboîtement des deux composants (2) par le fait que le composant (2) déformé est remis en forme de façon élastique par réduction ou suppression des forces de pression radiales, le contour périphérique efficace du composant déformable présentant dans l'état non déformé des parties périphériques (3a, 3b) situées à l'intérieur et à l'extérieur du contour périphérique efficace de l'autre composant, **caractérisé en ce qu'**on utilise comme composant déformable élastiquement un corps creux (2), qui présente dans sa paroi plusieurs cavités (4) fermées en direction du contour périphérique efficace, et **en ce que** les forces de pression radiales sont exercées sur le contour intérieur et le contour extérieur, opposé au contour périphérique efficace, de la cavité (2) de telle sorte que leurs lignes d'action traversent les cavités (4) en particulier à peu près au milieu, vu dans le sens périphérique.

2. Procédé selon la revendication 1, **caractérisé en ce que** les forces de pression radiales sont exercées sur le corps creux (2) avec une répartition uniforme sur le pourtour.

3. Procédé selon l'une quelconque des revendications précédentes, **caractérisé en ce qu'**on utilise un corps creux (2), dont le contour périphérique efficace a une forme de base polygonale ou ovale.

4. Procédé selon l'une quelconque des revendications précédentes pour la fixation reproductible d'un corps creux (2) déformable sur une tige, **caractérisé en ce qu'**on utilise un corps creux (2), dont les cavités (4) sont prévues dans la zone des parties périphériques (3b), qui sont disposées dans l'état non tendu à l'extérieur du contour périphérique de la tige à tendre.

5. Procédé selon l'une quelconque des revendications 1 à 3 pour la fixation reproductible d'un corps creux (2) déformable élastiquement dans une cavité d'un composant, **caractérisé en ce qu'**on utilise un corps creux (2), dont les cavités (4) sont prévues dans la zone des parties périphériques qui sont situées dans l'état non tendu à l'intérieur du contour périphérique de l'autre composant (1).

6. Système d'assemblage avec deux composants (2) à assembler, avec lequel l'un des composants (2) peut être déformé élastiquement par des forces de pression radiales de telle sorte qu'un contour périphérique efficace correspond au contour périphérique efficace correspondant de l'autre composant avec un jeu prédéfini, de sorte que les deux composants (2) peuvent être emboîtés l'un dans l'autre et avec lequel, après l'emboîtement des deux composants (2), on peut établir un assemblage par pression par le fait que le composant (2) déformable peut être remis en forme élastiquement par réduction et suppression des forces de pression radiales, le contour périphérique efficace du composant (2) déformable présentant dans l'état non déformé des parties périphériques (3a, 3b) disposées à l'intérieur et à l'extérieur du contour périphérique efficace de l'autre composant, **caractérisé en ce que** le composant déformable élastiquement est un corps creux (2), qui présente dans sa paroi plusieurs cavités (4), qui sont fermées en direction du contour périphérique efficace.

7. Système d'assemblage selon la revendication 6 pour la fixation d'un corps creux (2) déformable sur une tige, **caractérisé en ce que** les cavités (4) sont prévues dans la zone des parties périphériques (3b) qui sont situées dans l'état non tendu à l'extérieur du contour périphérique de la tige à tendre.

8. Système d'assemblage selon la revendication 6 pour la fixation reproductible d'un corps creux (2) déformable élastiquement dans une cavité d'un composant, **caractérisé en ce que** les cavités (4) sont prévues dans la zone des parties périphériques du corps creux (2) qui sont situées dans l'état non tendu à l'intérieur du contour périphérique de l'autre composant.

9. Système d'assemblage selon l'une quelconque des revendications 6 à 8, **caractérisé en ce que** les cavités sont conçues en forme de reins.

10. Système d'assemblage selon l'une quelconque des revendications 6 à 9, **caractérisé en ce que** le contour périphérique efficace du corps creux (2) présente dans l'état non tendu une forme de base polygonale ou ovale.

11. Système d'assemblage selon l'une quelconque des revendications 6 à 10, **caractérisé en ce que** les cavités (4) s'étendent globalement sur au moins 200°, de préférence sur 200 à 300°, dans le sens périphérique et sont séparés l'un de l'autre seulement par des zones de montant étroites.

12. Système d'assemblage selon la revendication 11, **caractérisé en ce que** le corps creux (2) présente trois cavités (4), qui s'étendent respectivement sur une zone périphérique de 80 à 100° et sont disposées en particulier avec une répartition uniforme à la périphérie du corps creux (2).
